# EUROPÄISCHE PATENTSCHRIFT

(11) **EP 2 567 783 B1**
(45) Veröffentlichungstag und Bekanntmachung des Hinweises auf die Patenterteilung: **19.03.2014**
(21) Anmeldenummer: 11007369.9
(22) Anmeldetag: 09.09.2011
(51) Int. Cl.: B24B 27/00, B24B 41/00, B23Q 3/157, B23Q 11/10

(54) **Schleifmaschine**
Grinding machine
Machine à meuler

(43) Veröffentlichungstag der Anmeldung: 13.03.2013
(73) Patentinhaber: Rollomatic S.A., 2525 Le Landeron (CH)
(72) Erfinder: Zufferey, Valentin, CH-3966 Chalais (CH); Tschampion, Pierre, 2520 La Neuveville (CH)
(74) Vertreter: Geitz Truckenmüller Lucht

(56) Entgegenhaltungen:
- EP-A2- 1 935 559
- DE-A1- 10 111 098
- DE-A1- 19 844 242
- DE-A1-102007 004 633
- DE-U1- 8 715 642

## Beschreibung

Die Erfindung geht aus von einer Schleifmaschine zum spanabhebenden Bearbeiten von Werkstücken mit einer Schleifspindel, einer Kühlmittelversorgung und einem Werkzeugmagazin, welches mehrere Bearbeitungswerkzeuge enthält, die in eine Werkzeugaufnahme der Schleifspindel passen.

Schleifmaschinen werden zum Bearbeiten unterschiedlicher Werkstücke eingesetzt. Zur Bearbeitung sind daher je nach Anforderung verschiedene Bearbeitungswerkzeuge vorgesehen. Hierzu zählen beispielsweise Schleifwerkzeuge und Werkzeuge zum Polieren. Die Bearbeitungswerkzeuge befinden sich in einem Werkzeugmagazin. Nur das für die aktuelle Bearbeitung notwendige Bearbeitungswerkzeug oder die Kombination aus mehreren Bearbeitungswerkzeugen ist an der Schleifspindel angeordnet. Die Bearbeitungswerkzeuge sind mit einem Haltedorn angestattet, der in ein Spannfutter der Schleifspindel passt. Es können auch mehrere Bearbeitungswerkzeuge an einem gemeinsamen Haltedorn angeordnet sein. Eine derartige Kombination aus mehreren Bearbeitungswerkzeugen mit einem gemeinsamen Haltedorn wird im folgenden auch als Bearbeitungswerkzeug bezeichnet. Soll ein an der Schleifspindel angeordnetes erstes Bearbeitungswerkzeug durch ein zweites Bearbeitungswerkzeug aus dem Werkzeugmagazin ersetzt werden, so wird das erste Bearbeitungswerkzeug von der Schleifspindel entnommen und in dem Werkzeugmagazin angeordnet. Anschließend wird das zweite Bearbeitungswerkzeug aus dem Werkzeugmagazin entnommen und an der Schleifspindel angeordnet. Dieser Werkzeugwechsel erfolgt mit Hilfe einer Werkzeugwechseleinrichtung oder einer Transfereinrichtung. Zusammen mit dem Bearbeitungswerkzeug wird ein Kühlmittelverteiler ausgetauscht, der dem Bearbeitungswerkzeug zugeordnet ist. Ein Kühlmittelverteiler weist üblicherweise mehrere gebogene Rohre oder Schläuche auf, welche auf die zu kühlenden Stellen eines Bearbeitungswerkzeugs gerichtet sind. Der Kühlmittelverteiler muss daher stets an das zugehörige Bearbeitungswerkzeug angepasst sein. Ferner weist der Kühlmittelverteiler einen Anschluss auf, über den der Kühlmittelverteiler mit einer Kühlmittelversorgung der Schleifmaschine verbunden wird. Die Kühlmittelversorgung fördert ein Kühlmittel in die Nähe der Schleifspindel. Dort ist eine Aufnahme vorgesehen, in welche der Anschluss eines Kühlmittelverteilers flüssigkeitsdicht aufgenommen werden kann. Während die Kühlmittelversorgung das Kühlmittel bis in die Nähe der Schleifspindel fördert, sorgt der Kühlmittelverteiler dafür, dass das Kühlmittel von dort bis an die zu kühlenden Stellen eines an der Schleifspindel angeordneten Bearbeitungswerkzeugs gelangt.

Eine derartige Schleifmaschine ist aus der DE 198 44 242 C2 bekannt. An dem Werkzeugmagazin sind mehrere Halter mit jeweils einem Bearbeitungswerkzeug und einem Kühlmittelverteiler nebeneinander in einer Reihe angeordnet. Um die verschiedenen Bearbeitungswerkzeuge in Eingriff mit der Schleifspindel zu bringen, ist das Werkzeugmagazin vor der Schleifspindel hin- und her bewegbar. Hierzu ist eine Schlittenführung vorgesehen, in der das Werkzeugmagazin mit einem Schlitten geführt ist.

Als nachteilig erweist sich bei der bekannten Schleifmaschine, dass das gesamte Werkzeugmagazin vor der Schleifspindel hin und her bewegt werden muss, um ein Bearbeitungswerkzeug auszutauschen. Ferner wird durch das Werkzeugmagazin viel Raum vor der Schleifspindel beansprucht. Dies sorgt nicht nur für ein großes Baumaß der Schleifmaschine sondern behindert auch die Anordnung eines Werkstücks, welches mit der Schleifmaschine bearbeitet wird. Dieses Werkstück muss zwangsläufig vor der mit einem Bearbeitungswerkzeug ausgestatteten Schleifspindel angeordnet sein.

Der Erfindung liegt die Aufgabe zugrunde, eine Schleifmaschine zur Verfügung zu stellen, bei der das Werkzeugmagazin derart räumlich getrennt von der Schleifspindel angeordnet ist, dass es die Anordnung des zu bearbeitenden Werkstücks nicht beeinträchtigt, und bei der ein Wechsel des Bearbeitungswerkzeugs einfacher durchzuführen ist.

Diese Aufgabe wird durch eine Schleifmaschine mit den Merkmalen des Anspruchs 1 gelöst. Die Schleifmaschine zeichnet sich dadurch aus, dass das Werkzeugmagazin seitlich versetzt zur Schleifspindel angeordnet ist. Seitlich versetzt bedeutet in einer Richtung senkrecht zur Schleifspindelachse oder einer Verlängerung der Schleifspindelachse. Dabei ist das Werkzeugmagazin derart weit von der Schleifspindel räumlich getrennt, dass die Verlängerung der Schleifspindelachse außerhalb des Werkzeugmagazins und außerhalb von an dem Werkzeugmagazin angeordneten Bearbeitungswerkzeugen verläuft. Die Verlängerung der Schleifspindelachse bildet dabei eine Gerade, die abschnittsweise mit der Schleifspindelachse zusammenfällt. Um ein Bearbeitungswerkzeug von dem Werkzeugmagazin zu der Schleifspindel und umgekehrt zu transportieren, ist eine Transfereinrichtung vorgesehen. Diese bewegt sich zwischen der Schleifspindelachse und dem Werkzeugmagazin hin und her. Es handelt sich hierbei um eine Bewegung entlang einer Geraden. Da das Werkzeugmagazin seitlich versetzt zur Schleifspindel angeordnet ist und die Verlängerung der Schleifspindelachse außerhalb des Werkzeugmagazins und den an dem Werkzeugmagazin angeordneten Werkzeughaltern verläuft, bewegt sich die Transfereinrichtung zur Überbrückung der Distanz zwischen dem Werkzeugmagazin und der Schleifspindel senkrecht zur Schleifspindelachse oder unter einem von 0° und 180° verschiedenen Winkel gegen die Schleifspindelachse.

Jedes der Bearbeitungswerkzeuge ist zusammen mit einem an das Bearbeitungswerkzeug angepassten Kühlmittelverteiler an einem Werkzeughalter in dem Werkzeugmagazin angeordnet. Jeder Werkzeughalter an dem Werkzeugmagazin nimmt jeweils genau ein Bearbeitungswerkzeug und einen Kühlmittelverteiler auf. Der Transport eines Bearbeitungswerkzeugs und dem ihm zugeordneten Kühlmittelverteiler von dem Werkzeugmagazin zu der Schleifspindel und zurück mittels der Transfereinrichtung erfolgt zusammen mit dem Werkzeughalter. Das Bearbeitungswerkzeug und der zugeordnete Kühlmittelverteiler lösen sich erst dann von dem Werkzeughalter, wenn das Bearbeitungswerkzeug mit der Schleifspindel und der Kühlmittelverteiler mit der Kühlmittelversorgung verbunden sind.

An einem Werkzeughalter sind ein Bearbeitungswerkzeug und ein Kühlmittelverteiler in fest vorgegebenem Abstand und fest vorgegebener Ausrichtung gehalten. Dies erfolgt bevorzugt durch zwei voneinander unabhängige Befestigungseinrichtungen des Werkzeughalters. In bevorzugter Weise sind das Bearbeitungswerkzeug und der Kühlmittelverteiler drehfest an dem Werkzeughalter fixiert. Das Bearbeitungswerkzeug und der Kühlmittelverteiler werden an einem Werkzeughalter relativ zueinander ausgerichtet. Der Kühlmittelverteiler wird bezüglich des Bearbeitungswerkzeugs derart an dem Werkzeughalter justiert, dass die zu kühlenden Stellen des Bearbeitungswerkzeugs während einer Werkstückbearbeitung durch den Kühlmittelverteiler mit Kühlmittel versorgt werden. Ferner werden das Bearbeitungswerkzeug und der Kühlmittelverteiler mit exakt der gleichen Ausrichtung zueinander und dem gleichen Abstand voneinander an dem Werkzeughalter angeordnet, die sie auch bei ihrer Position an der Schleifspindel und an der Kühlmittelversorgung einnehmen. Die durch die Befestigung des Bearbeitungswerkzeugs und des Kühlmittelverteilers an dem Werkzeughalter vorgegebene Ausrichtung zueinander und der Abstand voneinander ändern sich während der gesamten Verweildauer in der Schleifmaschine nicht. Sie bleiben nicht nur in dem Werkzeugmagazin sondern auch während des Transports mit der Transfereinrichtung und beim Aufsetzen und Lösen des Bearbeitungswerkzeugs auf bzw. von der Schleifspindel und dem Befestigen und Lösen des Kühlmittelverteilers von der Kühlmittelversorgung erhalten. Die Justierung des Bearbeitungswerkzeugs und des Kühlmittelverteilers an dem Werkzeughalter kann außerhalb der Schleifmaschine erfolgen. Der Werkzeughalter mit dem Bearbeitungswerkzeug und dem Kühlmittelverteiler wird erst an dem Werkzeugmagazin angeordnet, wenn Bearbeitungswerkzeug und Kühlmittelverteiler optimal zueinander ausgerichtet sind.

Das Aufsetzen eines Bearbeitungswerkzeugs auf die Schleifspindel erfolgt folgendermaßen: Zunächst wird das Werkzeugmagazin derart bewegt, dass sich der Werkzeughalter mit dem gewünschten Bearbeitungswerkzeug und dem zugehörigen Kühlmittelverteiler an einer Position befinden, an der die Transfereinrichtung den Werkzeughalter von dem Werkzeugmagazin abgreifen kann. Die Transfereinrichtung nimmt den Werkzeughalter aus dem Werkzeugmagazin auf, wobei sich der Werkzeughalter aus dem Werkzeugmagazin löst. Anschließend wird der Werkzeughalter mit dem Bearbeitungswerkzeug und dem Kühlmittelverteiler durch die Transfereinrichtung bis zu der Schleifspindel transportiert. Befindet sich das Bearbeitungswerkzeug mit seiner Bearbeitungswerkzeugachse in Verlängerung der Schleifspindelachse so werden die Schleifspindel und/ oder das Bearbeitungswerkzeug relativ zueinander in axialer Richtung aufeinander zu bewegt, bis ein Halteelement des Bearbeitungswerkzeugs in eine Werkzeugaufnahme der Schleifspindel eingreift. Bei dem Halteelement handelt es sich beispielsweise um einen Haltedorn. Bei der Werkzeugaufnahme handelt es sich beispielsweise um ein Spannfutter. Gleichzeitig mit der Befestigung des Bearbeitungswerkzeugs an der Schleifspindel erfolgt das Ankoppeln des dem Bearbeitungswerkzeug zugeordneten Kühlmittelverteilers an die Kühlmittelversorgung der Schleifmaschine. Dabei wird der Kühlmittelverteiler flüssigkeitsdicht mit der Kühlmittelversorgung verbunden. Sobald das Bearbeitungswerkzeug mit der Schleifspindel und der Kühlmittelverteiler mit der Kühlmittelversorgung verbunden sind, bewegt sich die Transfereinrichtung in Richtung des Werkzeugmagazins und entfernt sich dabei von der Schleifspindel. Dabei werden das Bearbeitungswerkzeug und der Kühlmittelverteiler von dem Werkzeughalter gelöst, der an der Transfereinrichtung verbleibt. Es genügt, dass sich die Transfereinrichtung mit Werkzeughalter so weit von der Schleifspindel entfernt, dass die Bearbeitung eines Werkstücks mit dem auf der Schleifspindel angeordneten Bearbeitungswerkzeug nicht behindert wird. Alternativ dazu kann sich die Transfereinrichtung auch bis zu dem Werkzeugmagazin bewegen. Je weiter sich die Transfereinrichtung mit dem leeren Werkzeughalter von der Schleifspindel entfernt, um mehr Zeit wird für einen späteren Werkzeugwechsel beansprucht.

Um das Bearbeitungswerkzeug zu wechseln, wird die Transfereinrichtung mit dem leeren Werkzeughalter wieder in Richtung der Schleifspindel bewegt. Dabei wird der Werkzeughalter mit dem Bearbeitungswerkzeug und dem Kühlmittelverteiler verbunden. Anschließend lösen sich die Schleifspindel von dem Bearbeitungswerkzeug und der Kühlmittelverteiler von der Kühlmittelversorgung. Schließlich bewegt sich die Transfereinrichtung mit dem Werkzeughalter, welcher mit dem Bearbeitungswerkzeug und dem Kühlmittelverteiler ausgestattet ist, zu dem Werkzeugmagazin. Dort wird der Werkzeughalter mit dem Bearbeitungswerkzeug und dem Kühlmittelverteiler an dem Werkzeugmagazin an der ihm zugeordneten Position abgesetzt, so dass der Werkzeughalter wieder mit dem Werkzeugmagazin verbunden ist. Anschließend wird das Werkzeugmagazin bewegt, bis sich das nächste gewünschte Bearbeitungswerkzeug an einer Position befindet, an der der zugehörige Werkzeughalter von der Transfereinrichtung abgegriffen werden kann. Das Aufsetzen diese zweiten Bearbeitungswerkzeugs auf die Schleifspindel erfolgt wie oben beschrieben.

Damit erfolgt ein Werkzeugwechsel auf schnelle und einfache Weise. Um ein Bearbeitungswerkzeug aus dem Werkzeugmagazin an der Schleifspindel anzuordnen, muss nicht das gesamte Werkzeugmagazin vor der Schleifspindel hin und her bewegt werden, sondern nur die Transfereinrichtung. Da sich diese nach dem Werkzeugwechsel von der Schleifspindel wieder entfernt, behindert sie die Bearbeitung eines Werkstücks mit dem auf der Schleifspindel angeordneten Bearbeitungswerkzeug nicht.

Nach einer vorteilhaften Ausgestaltung der Erfindung ist die Transfereinrichtung in einer Richtung senkrecht zur Schleifspindelachse hin und her beweglich. Dies kann entweder ausschließlich in einer Richtung senkrecht zur Spindelachse erfolgen oder unter einem Winkel, welcher von 0° und von 180° verschieden ist. Hierzu kann die Transfereinrichtung entlang einer Ebene verschiebbar geführt sein, wobei die Ebene und die Spindelachse senkrecht zueinander sind oder einen von 0° und von 180 ° verschiedenen Winkel einschließen. Die Bewegung weist damit zumindest eine zur Spindelachse senkrechte Komponente auf.

Nach einer weiteren vorteilhaften Ausgestaltung der Erfindung ist das Werkzeugmagazin um eine Werkzeugmagazinachse drehbar. Das Werkzeugmagazin kann beispielsweise die Form eines Rades aufweisen. An verschiedenen Winkelpositionen sind die Werkzeughalter mit den unterschiedlichen Bearbeitungswerkzeugen und den zugehörigen Kühlmittelverteilern angeordnet. Die Transfereinrichtung greift bei einem Werkzeugwechsel bevorzugt denjenigen Werkzeughalter von dem Werkzeugmagazin ab, der den kleinsten Abstand zu der Schleifspindelachse aufweist. Das Werkzeugmagazin wird daher um einen Winkel um die Werkzeugmagazindrehachse gedreht, um den Werkzeughalter mit dem gewünschten Bearbeitungswerkzeug an diese Position zu bringen. Es ist ein Antrieb vorgesehen, der das Werkzeugmagazin zur Rotation antreibt. Von dem Radius des Werkzeugmagazins hängt ab, wie viele Werkzeughalter mit Bearbeitungswerkzeugen und Kühlmittelverteilern an dem Werkzeugmagazin Platz finden.

Da die Spindelachse bzw. die Verlängerung der Schleifspindelachse außerhalb des Werkzeugmagazins verläuft, ist die Werkzeugmagazinachse versetzt zur Schleifspindelachse. Der Abstand zwischen der Verlängerung der Schleifspindelachse und der Werkzeugmagazinachse ist größer als der Radius des drehbaren Werkzeugmagazins. Dabei entspricht der Radius des Werkzeugmagazins dem Abstand zwischen der Werkzeugmagazinachse und dem am weitesten von der Werkzeugmagazinachse entfernten Punkt des Werkzeugmagazins.

Nach einer weiteren vorteilhaften Ausgestaltung der Erfindung ist die Werkzeugmagazinachse parallel zu der Schleifspindelachse. Dies hat den Vorteil, dass die Bearbeitungswerkzeuge und die Kühlmittelverteiler in einfacher Weise mit derselben Ausrichtung an dem Werkzeugmagazin angeordnet sein können wie bei ihrer Position an der Schleifspindel und der Kühlmittelversorgung. Darüber hinaus kann der Winkel zwischen der Werkzeugmagazinachse und der Schleifspindelachse auch von 0° verschieden sein.

Nach einer weiteren vorteilhaften Ausgestaltung der Erfindung weist das Werkzeugmagazin ein umlaufendes, endloses Maschinenteil auf, an welchem die Werkzeughalter angeordnet sind. Bei dem umlaufenden, endlosen Maschinenteil kann es sich beispielsweise um eine Kette handeln. Ein Antrieb ist vorgesehen, um das Maschinenteil zum Umlaufen anzutreiben. An einer bestimmten Position greift die Transfereinrichtung einen Werkzeughalter von dem Magazin ab: Das umlaufende Maschinenteil wird daher soweit bewegt, dass sich der Werkzeughalter mit dem gewünschten Bearbeitungswerkzeug an der Position befindet, an der die Transfereinrichtung den Werkzeughalter abgreifen kann.

Nach einer weiteren vorteilhaften Ausgestaltung der Erfindung weist der Werkzeughalter ein Element auf mit einem ersten Abschnitt, mit welchem der Werkzeughalter an dem Werkzeugmagazin befestigbar ist, und mit einem zweiten Abschnitt, an welchem ein Bearbeitungswerkzeug und ein Kühlmittelverteiler befestigbar sind. Das Element kann beispielsweise eine Platte sein. Die Platte hat den Vorteil, dass sie flächig an dem Werkzeugmagazin anliegen kann, sofern dieses einen Adapter mit einem ebenfalls flächigen Ankopplungsbereich aufweist. Dies sorgt für eine hohe Stabilität. Ferner bietet eine Platte genügend Platz zur Befestigung eines Bearbeitungswerkzeugs und eines Kühlmittelverteilers.

Nach einer weiteren vorteilhaften Ausgestaltung der Erfindung weist der Werkzeughalter mindestens eine Spanneinrichtung mit mindestens einem elastischen Spannarm auf. Der elastische Spannarm wird beim Klemmen bzw. Einspannen eines Bearbeitungswerkzeugs oder eines Kühlmittelverteiler elastisch verformt und drückt aufgrund seiner Rückstellkraft das Bearbeitungswerkzeug oder den Kühlmittelverteiler gegen einen zweiten Spannarm, der elastisch oder starr ist, oder gegen ein starres Gegenstück. Es können auch zwei Spanneinrichtungen mit mindestens einem elastischen Spannarm an dem Werkzeughalter vorgesehen sein: eine erste Spanneinrichtung für ein Bearbeitungswerkzeug und eine zweite Spanneinrichtung für einen Kühlmittelverteiler. Der Spannarm oder die Spannarme einer Spanneinrichtung können als elastische Biegefeder ausgebildet sein.

Nach einer weiteren vorteilhaften Ausgestaltung der Erfindung weist eine Spanneinrichtung zwei elastische Spannarme auf, welche an ihrem einen Ende über ein Verbindungsteil miteinander verbunden. Dieses Ende wird als proximales Ende bezeichnet. Das entgegen gesetzte distale Ende der Spannarme ist ein freies Ende. Dieses Ende der Spannarme wird beim Befestigen eines Bearbeitungswerkzeugs oder eines Kühlmittelverteilers an dem Werkzeughalter ausgelenkt. Die beiden Spannarme einer Spanneinrichtung werden dabei in entgegen gesetzte Richtung ausgelenkt. Durch die Rückstellkraft der elastischen Spannarme wird das Bearbeitungswerkzeug oder der Kühlmittelverteiler zwischen den beiden Spannarmen eingeklemmt.

Nach einer weiteren vorteilhaften Ausgestaltung der Erfindung sind die Spannarme der Spanneinrichtung länglich. Die Spannarme sind an dem Werkzeughalter mit ihrer Längsachse senkrecht zur Spindelachse ausgerichtet.

Zum Befestigen und Lösen eines Bearbeitungswerkzeugs wird dieses in Längsrichtung der länglichen Spannarme bewegt. Entsprechendes gilt für einen Kühlmittelverteiler.

Nach einer weiteren vorteilhaften Ausgestaltung der Erfindung weisen die Spannarme an ihrem distalen Ende einen größeren Querschnitt auf als an ihrem proximalen Ende. Die Querschnittsvergrößerung erstreckt sich vor allem nach innen in Richtung des anderen Spannarms der Spanneinrichtung. Dadurch wird der Abstand zwischen den distalen Enden der beiden Spannarme verkleinert gegenüber Spannarmen ohne Querschnittsvergrößerung am distalen Ende. Dadurch werden das Bearbeitungswerkzeug und/ oder der Kühlmittelverteiler besser zwischen den Spannarmen gehalten. Insbesondere wird verhindert, dass sich das Bearbeitungswerkzeug von den beiden Spannarmen unerwünscht und unkontrolliert löst. Das Bearbeitungswerkzeug und/ oder der Kühlmittelverteiler rasten an der Spanneinrichtung ein.

Nach einer weiteren vorteilhaften Ausgestaltung der Erfindung ist das distale Ende der Spannarme keilförmig ausgebildet. Dabei verjüngt sich der Keil zum distalen Ende hin. Er kann sich auch alternativ oder kumulativ in die entgegen gesetzte Richtung verjüngen. Die Keilform hat nicht nur den Vorteil einer Querschnittsvergrößerung wie oben beschrieben sondern bildet außerdem noch eine Rampe aus, entlang der das Bearbeitungswerkzeug oder der Kühlmittelverteiler beim Befestigen an dem Spanneinrichtung gleiten kann.

Nach einer weiteren vorteilhaften Ausgestaltung der Erfindung ist ein an einem Werkzeughalter angeordnetes Bearbeitungswerkzeug drehfest an dem Werkzeughalter festgelegt. Dies wird beispielsweise dadurch erreicht, dass der Werkzeughalter einen Anschlag aufweist, der mit mindestens einer ebenen Fläche ausgestattet ist. Das zugehörige Bearbeitungswerkzeug weist einen Abschnitt mit mindestens einer ebenen Fläche auf. Es können auch mehrere ebene Flächen an dem Anschlag und an dem Bearbeitungswerkzeug vorgesehen sein, die unter einen Winkel zueinander angeordnet sind. Ist das Bearbeitungswerkzeug an dem Werkzeughalter befestigt, so liegt die ebene Fläche des Bearbeitungswerkzeugs an dem Anschlag des Werkzeughalters an. Durch den Anschlag wird verhindert, dass sich das Bearbeitungswerkzeug relativ zu dem Werkzeughalter drehen kann. Dadurch ist gewährleistet, dass das Bearbeitungswerkzeug seine Ausrichtung an dem Werkzeughalter beibehält.

Nach einer weiteren vorteilhaften Ausgestaltung der Erfindung ist ein an einem Werkzeughalter angeordneter Kühlmittelverteiler drehfest an dem Werkzeughalter festgelegt. Dies wird beispielsweise dadurch erreicht, dass der Werkzeughalter einen Anschlag aufweist, der mit mindestens einer ebenen Fläche ausgestattet ist. Der Kühlmittelverteiler weist einen Abschnitt mit mindestens einer ebenen Fläche auf. Es gilt entsprechendes wie bei dem Anschlag des Werkzeughalters für ein Bearbeitungswerkzeug.

Nach einer weiteren vorteilhaften Ausgestaltung der Erfindung weist die Transfereinrichtung einen Transferarm auf. Der Transferarm ist an seinem einen Ende mit einem Schlitten ausgestattet, der in einer Schlittenführung der Schleifmaschine geführt ist. Dabei kann die Schlitterführung senkrecht zur Schleifspindelachse verlaufen oder unter einem von 90° verschiedenen Winkel. Der Transferarm ist an seinem anderen Ende mit einer Aufnahmeeinrichtung für einen Werkzeughalter ausgestattet. Die Schlittenführung sorgt dafür, dass sich die Transfereinrichtung ausschließlich in einer Richtung entlang einer Geraden hin und her bewegt.

Nach einer weiteren vorteilhaften Ausgestaltung der Erfindung weist die Schleifspindel eine Indexierung auf. Die Schleifspindel wird durch einen Motor zur Rotation angetrieben. Die Übertragung eines Drehmoments von dem Motor auf die Schleifspindel wird unterbunden, wenn das Bearbeitungswerkzeug gewechselt wird. Wenn der Werkzeugwechsel abgeschlossen und das zu bearbeitende Werkstück in Position gebracht ist, wird das Drehmoment des Motors wieder auf die Schleifspindel übertragen. Dank der Indexierung der Schleifspindel, hält diese bei der Unterbrechung der Drehmomentübertragung stets in der gleichen Position. Bleibt die Ausrichtung eines Bearbeitungswerkzeugs ebenfalls beim Werkzeugwechsel konstant, so ist gewährleistet, dass die Ausrichtung von Schleifspindel und Bearbeitungswerkzeug relativ zueinander stets gleich bleibt, solange sich das Bearbeitungswerkzeug in der Schleifmaschine befindet.

Nach einer weiteren vorteilhaften Ausgestaltung der Erfindung ist an dem Werkzeughalter in einer Ausnehmung ein Befestigungsteil beweglich und unverlierbar angeordnet. Das Befestigungsteil steht an der dem Werkzeugmagazin zugewandten Seite des Werkzeughalters mit einem ersten Abschnitt über den Werkzeughalter über. Ferner steht das Befestigungsteil an der der Transfereinrichtung zugewandten Seite des Werkzeughalters mit einem zweiten Abschnitt über den Werkzeughalter über. An dem ersten und zweiten Abschnitt greift eine Halteeinrichtung des Werkzeugmagazins und der Transfereinrichtung an. Diese Halteeinrichtung kann beispielsweise mit Klemmbacken oder Spannarmen ausgestattet sein, die an dem ersten Abschnitt oder dem zweiten Abschnitt des Befestigungsteils angreifen. Die Halteeinrichtung des Werkzeugmagazins und die Halteeinrichtung der Transfereinrichtung können bei der Aufnahme und Abgabe eines Werkzeughalters außerdem gleichzeitig an dem Befestigungsteil angreifen, um den Werkzeughalter von dem Werkzeugmagazin an die Transfereinrichtung oder umgekehrt zu übergeben.

Nach einer weiteren vorteilhaften Ausgestaltung der Erfindung weist der Kühlmittelverteiler zwei Kühlmittelverteileinheiten auf, die an einer Kühlmittelverteilerbasis lösbar angeordnet sind. Die beiden Kühlmittelverteileinheiten sind im wesentlichen gleich aufgebaut und weisen mehrere Rohre oder Schläuche auf. Dies erleichtert das Austauschen eines Bearbeitungswerkzeugs an dem Werkzeughalter und gegebenenfalls einzelner Komponenten des Kühlmittelverteilers aufgrund von Abnutzung oder Defekten. Darüber hinaus muss der Kühlmittelverteiler nach dem Austauschen eines an dem Werkzeughalter angeordneten Bearbeitungswerkzeugs nicht vollständig neu justiert werden.

Weitere Vorteile und vorteilhafte Ausgestaltungen der Erfindung sind der nachfolgenden Beschreibung, der Zeichnung und den Ansprüchen entnehmbar.

### Zeichnung

In der Zeichnung ist ein Ausführungsbeispiel der Erfindung dargestellt. Es zeigen:
- Figur 1: perspektivische Darstellung einer Schleifspindel, eines Werkzeugmagazins und einer Transfereinrichtung einer Schleifmaschine,
- Figur 2: Werkzeugmagazin mit Aufnahmeeinrichtung der Transfereinrichtung der Schleifmaschine gemäß Figur 1,
- Figur 3: Werkzeughalter mit Bearbeitungswerkzeug und Kühlmittelverteiler der Schleifmaschine gemäß Figur 1.

### Beschreibung des Ausführungsbeispiels

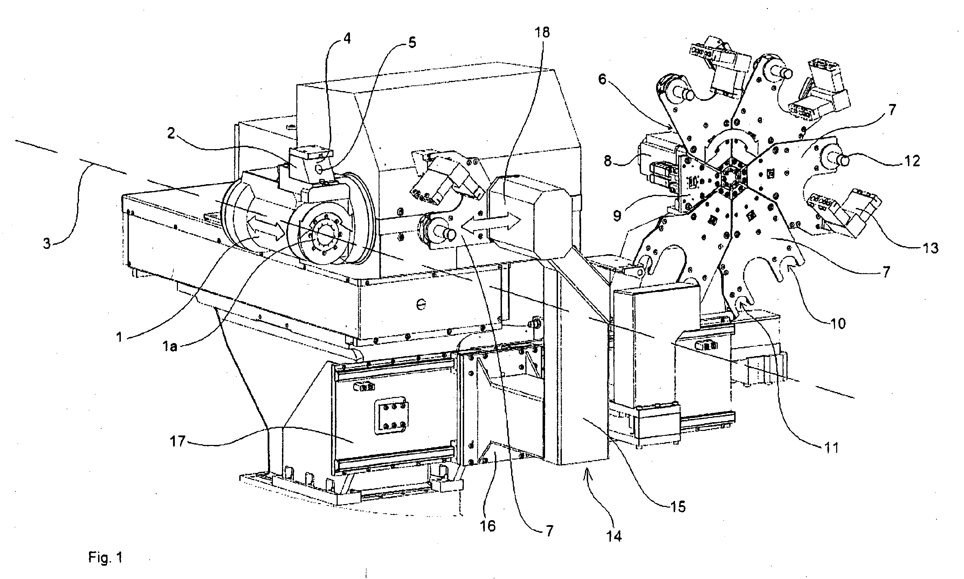

In Figur 1 ist eine Schleifmaschine mit Schleifspindel 1, Werkzeugmagazin 6 und Transfereinrichtung 14 in perspektivischer Ansicht dargestellt. Die Schleifmaschine weist eine Schleifeinheit auf, welche mit einer zur Rotation angetriebenen Schleifspindel 1 und einer Kühlmittelversorgung 2 ausgestattet ist. Die Schleifspindel 1 wird über einen Schleifspindelantrieb zur Rotation um die Schleifspindelachse 3 angetrieben. Die Schleifspindelachse ist einschließlich ihrer Verlängerung in der Zeichnung als gestrichelte Linie dargestellt. An der Schleifspindel 1 können verschiedene Bearbeitungswerkzeuge in einer Werkzeugaufnahme angeordnet werden. Die Werkzeugaufnahme ist in der Zeichnung nicht erkennbar. Das Kühlmittel für die Kühlung eines Bearbeitungswerkzeugs wird über die Kühlmittelversorgung 2 bis zur Schleifeinheit gefördert. Die Kühlmittelversorgung 2 weist eine Aufnahme 4 auf, an die ein Kühlmittelverteiler angeschlossen werden kann. Jedem Bearbeitungswerkzeug ist ein Kühlmittelverteiler zugeordnet. Durch den Kanal 5 der Aufnahme 4 strömt das Kühlmittel.

Die Schleifmaschine weist ferner ein Werkzeugmagazin 6 auf, an dem insgesamt sechs Werkzeughalter 7 angeordnet werden können. Das Werkzeugmagazin 6 ist um eine Werkzeugmagazinachse drehbar, welche parallel zur Schleifspindelachse 3 verläuft. Das Werkzeugmagazin wird durch einen Antrieb 8 zur Rotation um die Werkzeugmagazinachse angetrieben. Für jeden Werkzeughalter 7 weist das Werkzeugmagazin 6 einen Adapter 9 auf, der als trapezförmige Platte ausgebildet ist. Über diese Adapter 9 werden die Werkzeughalter 7 an dem Werkzeugmagazin 6 befestigt. Alle Adapter 9 bilden zusammen ein Rad, das um die Werkzeugmagazinachse drehbar ist.

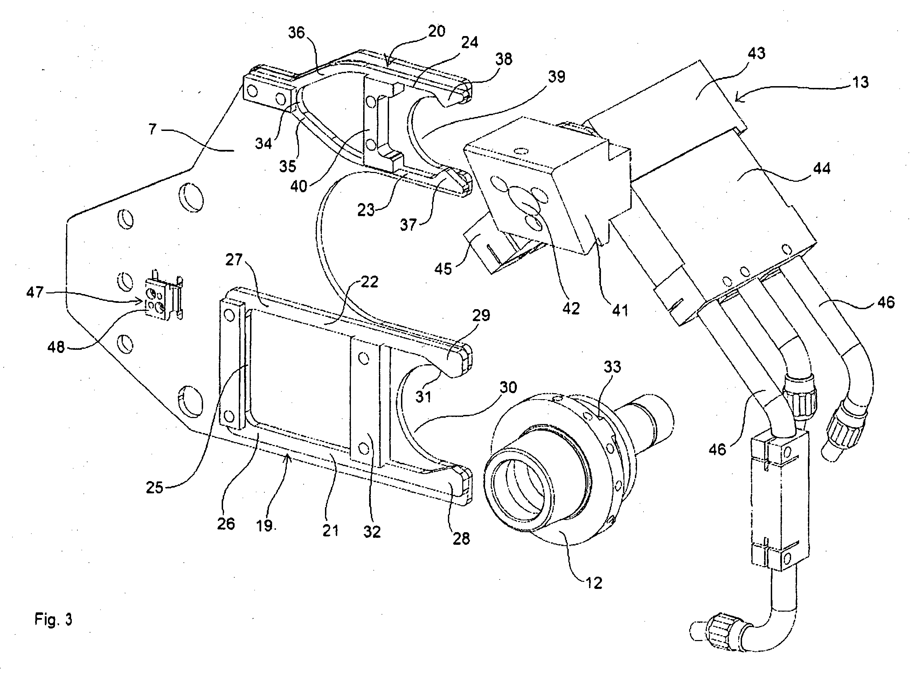

Jeder Werkzeughalter 7 ist als ebene Platte ausgebildet. Er weist eine Aufnahme 10 für ein Bearbeitungswerkzeug 12 und eine Aufnahme 11 für einen dem Bearbeitungswerkzeug 12 zugeordneten Kühlmittelverteiler 13 auf. Drei an dem Werkzeugmagazin 6 angeordnete Werkzeughalter 7 sind mit einem Bearbeitungswerkzeug 12 und einem Kühlmittelverteiler 13 ausgestattet. Zur besseren Übersichtlichkeit sind die Bearbeitungswerkzeuge 12 in Figur 1 ohne Schleifscheiben oder sonstige radial nach außen abstehende Bearbeitungselemente dargestellt. Darüber hinaus sind die Kühlmittelverteiler 13 in Figur 1 ohne Rohre dargestellt, welche das Kühlmittel unmittelbar an eine Schleifscheibe eines Bearbeitungswerkzeugs fördern. Diese Rohre 46 sind in Figur 3 dargestellt. Zwei der an dem Werkzeugmagazin 6 angeordneten Werkzeughalter 7 in Figur 1 weisen kein Bearbeitungswerkzeug und keinen Kühlmittelverteiler auf. Ein Adapter 9 des Werkzeugmagazins 6 in Figur 1 ist frei, weil der zugehörige Werkzeughalter 7 durch eine Transfereinrichtung 14 zur Schleifeinheit transportiert wird.

Das Werkzeugmagazin 6 ist zwar drehbar um die Werkzeugmagazinachse, jedoch verändert es seine Position relativ zur Schleifspindel 1 und zur Schleifspindel 3 nicht. Der Abstand zwischen der Schleifspindachse 3 und der Werkzeugmagazinachse ist fest und ändert sich nicht. Dieser Abstand ist größer als der Radius des Werkzeugmagazins 6 einschließlich der an ihm angeordneten Werkzeughalter 7 mit Bearbeitungswerkzeugen 12 und Kühlmittelverteilern 13. Daher verläuft die Verlängerung der Schleifspindelachse 3 außerhalb des Werkzeugmagazins 6 und der an dem Werkzeugmagazin 6 angeordneten Bearbeitungswerkzeuge 12. Zum Transport eines Bearbeitungswerkzeugs 12 von dem Werkzeugmagazin 6 zu der Schleifspindel 1 ist die Transfereinrichtung 14 vorgesehen. Diese weist einen Arm 15 auf, der über einen Schlitten 16 an einer Schlittenführung 17 in einer Richtung senkrecht zur Schleifspindelachse 3 geführt ist. Dabei befindet sich die Schlittenführung 17 unterhalb der Schleifspindel 1 und unterhalb des Werkzeugmagazins 6. An seinem dem Schlitten 16 abgewandten Ende ist der Arm 15 der Transfereinrichtung mit einer Aufnahmeeinrichtung 18 für einen Werkzeughalter 7 ausgestattet. Mit Hilfe der Aufnahmeeinrichtung 18 wird ein Werkzeughalter 7 von dem Werkzeugmagazin 6 gelöst. An der Aufnahmeeinrichtung 18 bleibt der Werkzeughalter 7 solange fixiert, bis der Werkzeughalter 7 wieder an dem Werkzeugmagazin 6 abgesetzt wird. In der Darstellung gemäß Figur 1 befindet sich der Arm 15 der Transfereinrichtung 14 zwischen dem Werkzeugmagazin 6 und der Schleifspindel 1. Der an ihm angeordnete Werkzeughalter 7 wurde an dem freien Adapter 9 von dem Werkzeugmagazin 6 gelöst.

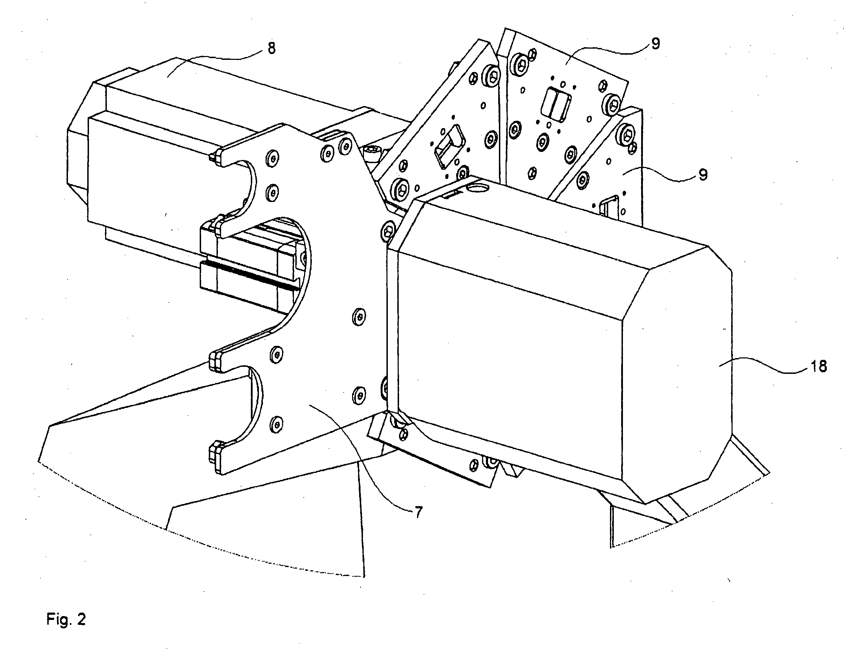

In Figur 2 ist das Werkzeugmagazin 6 mit dem Antrieb 8 und dem Adaptern 9 dargestellt. Im Unterschied zu Figur 1 weist nur einer der Adapter 9 einen Werkzeughalter 7 auf. Die übrigen Adapter 9 sind zur besseren Übersichtlichkeit leer. Ferner ist in Figur 2 die Aufnahmeeinrichtung 18 der Transfereinrichtung 14 dargestellt. Die Transfereinrichtung 14 befindet sich an einer anderen Position als in Figur 1. Bei der Darstellung gemäß Figur 2 wird der Werkzeughalter 7 gerade durch die Aufnahmeeinrichtung 18 von dem Adapter 9 gelöst.

In Figur 3 ist ein Werkzeughalter 7 mit einem Bearbeitungswerkzeug 12 und einem Kühlmittelverteiler 13 dargestellt. Zur besseren Übersichtlichkeit sind das Bearbeitungswerkzeug 12 und der Kühlmittelverteiler 13 von dem Werkzeughalter 7 gelöst. In der Darstellung gemäß Figur 1 ist dem Betrachter die dem Werkzeugmagazin 6 abgewandte Seite der Werkzeughalter 7 erkennbar. Im Unterschied dazu zeigt Figur 3 die Ansicht des Werkzeughalters 7, des Bearbeitungswerkzeugs 12 und des Kühlmittelverteilers 13 an der dem Werkzeugmagazin 7 zugewandten Seite. In dieser Darstellung sind zwei Spanneinrichtungen 19 und 20 erkennbar, die der Befestigung des Bearbeitungswerkzeugs 12 und des Kühlmittelverteilers 13 an dem Werkzeughalter 7 dienen. Beide Spanneinrichtungen 19, 20 weisen zwei Spannarme 21 und 22 , sowie 23 und 24 auf. Die Spannarme 21, 22, 23 und 24 sind als Biegefedern ausgebildet.

Die beiden Spannarme 21 und 22 der Spanneinrichtung 19 sind über ein quer zu den Spannarmen verlaufendes Verbindungsteil 25 miteinander verbunden. Ferner ist die Spanneinrichtung 19 an dem Verbindungsteil 25 fest mit dem Werkzeughalter 7 verbunden. Dieses dem Verbindungsteil 25 zugewandte Ende der Spannarme 21 und 22 wird als proximales Ende 26, 27 bezeichnet. Das entgegen gesetzte distale Ende 28, 29 der Spannarme 21, 22 weist einen größeren Querschnitt auf, als die übrigen Abschnitte der Spannarme 21, 22. An dem distalen Ende 28, 29 sind die beiden Spannarme 21 und 22 auf der einander zugewandten Seite verbreitert. Der verbreiterte Abschnitt weist eine Flanke oder Rampe auf, um das Befestigen und Lösen des Bearbeitungswerkzeugs 12 an der Spanneinrichtung 19 zu erleichtern. Dadurch ist das distale Ende der Spannarme keilförmig ausgebildet. Die beiden Spannarme 21, 22 sind als Biegefeder ausgebildet und können relativ zu der in Figur 3 dargestellten Ausgangsposition beim Befestigen des Bearbeitungswerkzeugs 12 ausgelenkt werden. Dabei werden die beiden distalen Enden 28 und 29 der beiden Spannarme 21 und 22 voneinander entfernt. Der in die Spannarme 21, 22 einzuführende Abschnitt des Bearbeitungswerkzeugs weist einen Durchmesser auf, der größer ist als der kleinste Abstand zwischen den beiden Spannarmen 21, 22 an ihren distalen Enden 28, 29. Daher werden die distalen Enden 28, 29 beim Einführen eines Bearbeitungswerkzeugs 12 auseinander gedrückt. Das Einführen des Bearbeitungswerkzeugs 12 in die Spanneinrichtung 19 erfolgt in Längsrichtung der länglichen Spannarme. Diese Richtung ist senkrecht zur Bearbeitungswerkzeugachse. Um das Bearbeitungswerkzeug 12 zwischen den Spannarmen 21 und 22 anordnen zu können, weist der Werkzeughalter 7 einen runden Ausschnitt 30 auf. Der Ausschnitt 30 ist so groß, dass das Bearbeitungswerkzeug 12 die distalen Enden 28 und 29 der beiden Spannarmen 21 und 22 passieren kann. Aufgrund des größeren Querschnitts der distalen Enden 28 und 29 der beiden Spannarmen 21 und 22 wird das Bearbeitungswerkzeug 12 sicher gehalten. Um das Bearbeitungswerkzeug 12 wieder aus der Spanneinrichtung 19 zu lösen, müssen die beiden distalen Enden 28 und 29 der Spannarmen 21 und 22 wieder auseinander gedrückt werden. Um dies zu erleichtern sind die distalen Enden 28 und 29 mit einer Rampe 31 ausgestattet.

Der Werkzeughalter 7 weist ferner im Bereich der Spanneinrichtung 19 einen Anschlag 32 auf, an welchem das Bearbeitungswerkzeug 12 mit einer ebenen Fläche 33 anliegt, wenn es an der Spanneinrichtung 19 befestigt ist. Der Anschlag 32 hat dabei an seiner dem Ausschnitt 30 zugewandten Seite ebenfalls eine eben Fläche. Die ebene Fläche des Anschlags 32 ist gleich groß oder größer als die ebene Fläche 33 des Bearbeitungswerkzeugs 12. Der Anschlag 32 und die korrespondierende ebene Fläche 33 des Bearbeitungswerkzeugs 12 verhindern, dass sich das an dem Werkzeughalter 7 befestigte Bearbeitungswerkzeug drehen kann. Der Anschlag 32 behindert die Auslenkung der Spannarme 21 und 22 beim Befestigen und Lösen des Bearbeitungswerkzeugs 12 nicht.

Die Spanneinrichtung 20 für den Kühlmittelverteiler 13 ist ähnlich aufgebaut wie die Spanneinrichtung 19. Im Unterschied zu der Spanneinrichtung 19 sind die Spannarme 23 und 24 der Spanneinrichtung 20 in ihrem dem proximalen Ende 35, 36 zugewandten Abschnitt gekrümmt. Dies ist im vorliegenden Fall durch die äußere Form des Werkzeughalters 7 bedingt. Die beiden Spannarme 23 und 24 sind über ein Verbindungsteil 34 miteinander verbunden, mit welchem die Spanneinrichtung 20 an dem Werkzeughalter 7 festgehalten ist. Die distalen Enden 37 und 38 der beiden Spannarme 23 und 24 weisen einen größeren Querschnitt als die übrigen Bereiche der Spannarme 23 und 24 auf. Ein runder Ausschnitt 39 in dem Werkzeughalter 7 ermöglicht das Einführen eines Kühlmittelverteilers 13 in den Zwischenraum zwischen den beiden Spannarmen 23 und 24. Beim Einführen werden die Spannarme 23 und 24 ausgehend von ihren distalen Enden 37 und 38 ausgelenkt. Der Durchmesser des Abschnitts der Kühlmitteleinrichtung 13, der zwischen den distalen Enden 37 und 38 hindurchgeführt wird, ist größer als der Abstand der distalen Enden 37, 38 in der Ausgangsstellung, in der diese nicht ausgelenkt sind.

Im Bereich der Spanneinrichtung 20 ist ein Anschlag 40 für den Kühlmittelverteiler 13 angeordnet. Der Anschlag 40 weist an seiner dem Ausschnitt 39 zugewandten Seite eine ebene Fläche auf. Ein Abschnitt des Kühlmittelverteilers 13, mit dem der Kühlmittelverteiler in seiner an der Spanneinrichtung 20 befestigten Stellung an dem Anschlag 40 anliegt, weist ebenfalls eine ebene Fläche auf. Diese ist in der Zeichnung nicht erkennbar. Durch den Anschlag 40 und den korrespondierenden Abschnitt des Kühlmittelverteilers wird verhindert, dass sich der an der Spanneinrichtung 20 befestigte Kühlmittelverteiler 13 drehen kann. Der Kühlmittelverteiler ist damit drehfest an dem Werkzeughalter 7 festgelegt.

Sind das Bearbeitungswerkzeug 12 an der Schleifspindel 1 und der Kühlmittelverteiler 13 an der Kühlmittelversorgung 2 angeordnet und mit diesen fest verbunden, so werden bei einer Bewegung der Transfereinrichtung 14 in Richtung des Werkzeugmagazins 6 das Bearbeitungswerkzeug 12 aus der Spanneinrichtung 19 und der Kühlmittelverteiler 13 aus der Spanneinrichtung 20 gezogen. Wird die Transfereinrichtung 14 wieder auf das an der Schleifspindel 1 angeordnete Bearbeitungswerkzeug 12 und den an der Kühlmittelversorgung 2 angeordneten Kühlmittelverteiler 13 zu bewegt, so wird das Bearbeitungswerkzeug 12 wieder in die Spanneinrichtung 19 und der Kühlmittelverteiler 13 wieder in die Spanneinrichtung 20 aufgenommen.

Der Kühlmittelverteiler 13 weist ein Anschlussstück 41 auf, das auf die Aufnahme 4 der Kühlmittelversorgung 2 passt. Das Anschlussstück 41 ist in Figur 3 dargestellt. Die Aufnahme 4 ist in Figur 1 dargestellt. Sowohl die Aufnahme 4 als auch das Anschlussstück 41 weisen eine Seite auf, die schräg gegen die Horizontale verläuft. Wenn die Transfereinrichtung 14 beim Werkzeugwechsel den Kühlmittelverteiler 13 an die Kühlmittelversorgung 2 heranführt, gleitet die schräge Fläche des Kühlmittelverteilers 13 an der schrägen Fläche des Kühlmittelversorgung 2 entlang. Wenn der Kühlmittelverteiler 13 seine Endstellung an der Kühlmittelversorgung 2 erreicht hat, wird der Kühlmittelverteiler 13 an der Kühlmittelversorgung arretiert. Wenn das Anschlussstück 41 an der Aufnahme 4 angeordnet ist, fluchten der Kanal 5 der Aufnahme 4 mit einem Kanal 42 des Anschlussstücks 41. Das Kühlmittel kann somit durch den Kanal 5 der Aufnahme 4 der Kühlmittelversorgung in den Kanal 42 des Kühlmittelverteilers 13 strömen und von dort über eine Kühlmittelverteilerbasis 43 in die beiden Kühlmittelverteileinheiten 44 und 45 gelangen. An den identisch aufgebauten Kühlmittelverteileinheiten 44 und 45 sind Rohre 46 angeordnet, die das Kühlmittel exakt an die zu kühlenden Stellen eines Bearbeitungswerkzeugs 12 leiten. Die zweite Kühlmittelverteileinheit 45 ist zur besseren Übersicht ohne Rohre dargestellt. Sie wird zu ihrem Einsatz mit entsprechenden Rohren ausgestattet.

In Figur 3 ist ein Befestigungsteil 47 des Werkzeughalters 7 erkennbar. Dieses ist in einer Ausnehmung des Werkzeughalters beweglich angeordnet. Der über den Werkzeughalter überstehende Abschnitt 48 ist größer als die Ausnehmung des Werkzeughalters. Entsprechendes gilt für einen zweiten Abschnitt des Befestigungsteils, der an der dem Betrachter abgewandten Seite über den Werkzeughalter übersteht. Somit ist das Befestigungsteil 47 unverlierbar an dem Werkzeughalter 7 gehalten. Der Abschnitt zwischen den beiden überstehenden Abschnitten weist einen kleineren Querschnitt als die Ausnehmung auf und ist länger als die Dicke des Werkzeughalters 7. Das Befestigungsteil 47 ist somit beweglich gegenüber dem Werkzeughalter 7. An dem überstehenden Abschnitt 48 kann eine Halteeinrichtung des Werkzeugmagazins 6 angreifen. An dem anderen überstehenden Abschnitt kann eine Halteeinrichtung der Transfereinrichtung angreifen.

### Bezugszahlen

- 1: Schleifspindel
- 2: Kühlmittelversorgung
- 3: Schleifspindelachse
- 4: Aufnahme der Kühlmittelversorgung
- 5: Kanal für Kühlmittel
- 6: Werkzeugmagazin
- 7: Werkzeughalter
- 8: Antrieb des Werkzeugmagazins
- 9: Adapter
- 10: Aufnahme für ein Bearbeitungswerkzeug
- 11: Aufnahme für einen Kühlmittelverteiler
- 12: Bearbeitungswerkzeug
- 13: Kühlmittelverteiler
- 14: Transfereinrichtung
- 15: Arm der Transfereinrichtung
- 16: Schlitten
- 17: Schlittenführung
- 18: Aufnahmeeinrichtung
- 19: Spanneinrichtung
- 20: Spanneinrichtung
- 21: Spannarm
- 22: Spannarm
- 23: Spannarm
- 24: Spannarm
- 25: Verbindungsteil
- 26: proximales Ende des Spannarms 21
- 27: proximales Ende des Spannarms 22
- 28: distales Ende des Spannarms 21
- 29: distales Ende des Spannarms 22
- 30: Ausschnitt
- 31: Rampe
- 32: Anschlag
- 33: ebene Fläche
- 34: Verbindungsteil
- 35: proximales Ende des Spannarms 23
- 36: proximales Ende des Spannarms 24
- 37: distales Ende des Spannarms 23
- 38: distales Ende des Spannarms 24
- 39: Ausschnitt
- 40: Anschlag
- 41: Anschlussstück der Kühlmittelverteilers
- 42: Kanal
- 43: Kühlmittelverteilerbasis
- 44: Kühlmittelverteileinheit
- 45: Kühlmittelverteileinheit
- 46: Rohr
- 47: Befestigungsteil
- 48: überstehender Abschnitt des Befestigungsteils

## Patentansprüche

1. Schleifmaschine zum spanabhebenden Bearbeiten von Werkstücken
mit einer Schleifspindel (1), welche eine Schleifspindelachse (3) aufweist,
mit einer Werkzeugaufnahme der Schleifspindel(1), wobei die Werkzeugaufnahme ein Bearbeitungswerkzeug (12) in axialer Richtung aufnimmt,
mit einer Kühlmittelversorgung (2) der Schleifmaschine,
mit einem versetzt zur Schleifspindel (1) beweglich angeordneten Werkzeugmagazin (6), wobei die Verlängerung der Schleifspindelachse (3) außerhalb des Werkzeugmagazins (6) und außerhalb von an dem Werkzeugmagazin (6) angeordneten Bearbeitungswerkzeug (12) verläuft,
mit mindestens zwei lösbar an dem Werkzeugmagazin (6) anzuordnenden Werkzeughaltern (7), wobei an jedem Werkzeughalter (7) ein Bearbeitungswerkzeug (12), welches in die Werkzeugaufnahme der Schleifspindel (1) passt, und ein zu dem Bearbeitungswerkzeug (12) gehörender Kühlmittelverteiler (13) lösbar angeordnet sind,
mit einer Transfereinrichtung (14), welche mindestens einen mit einem Bearbeitungswerkzeug (12) und einem Kühlmittelverteiler (13) ausgestatteten Werkzeughalter (7) von dem Werkzeugmagazin (6) aufnimmt, den Werkzeughalter (7) zu der Schleifspindel (1) transportiert, und das Bearbeitungswerkzeug (12) an der Schleifspindel (1) und den Kühlmittelverteiler (13) an der Kühlmittelversorgung (2) absetzt, wobei das Bearbeitungswerkzeug (12) mit der Schleifspindel (1) und der Kühlmittelverteiler (13) mit der Kühlmittelversorgung (2) verbunden wird, und wobei das Bearbeitungswerkzeug (12) und der Kühlmittelverteiler (13) von dem Werkzeughalter (7) gelöst werden.

2. Schleifmaschine nach Anspruch 1, **dadurch gekennzeichnet, dass** die Transfereinrichtung (14) in einer Richtung senkrecht zur Schleifspindelachse (3) hin und her beweglich ist.

3. Schleifmaschine nach Anspruch 1 oder 2, **dadurch gekennzeichnet, dass** das Werkzeugmagazin (6) um eine Werkzeugmagazinachse drehbar ist.

4. Schleifmaschine nach Anspruch 1 oder 2, **dadurch gekennzeichnet, dass** das Werkzeugmagazin ein umlaufendes, endloses Maschinenteil aufweist, an welchem die Werkzeughalter lösbar angeordnet sind.

5. Schleifmaschine nach einem der vorhergehenden Ansprüche, **dadurch gekennzeichnet, dass** der Werkzeughalter (7) ein Element aufweist mit einem ersten Abschnitt, mit welchem der Werkzeughalter (7) dem Werkzeugmagazin (6) befestigbar ist und mit einem zweiten Abschnitt, an welchem ein Bearbeitungswerkzeug (12) und ein Kühlmittelverteiler (13) befestigbar sind.

6. Schleifmaschine nach einem der vorhergehenden Ansprüche, **dadurch gekennzeichnet, dass** der Werkzeughalter mindestens eine Spanneinrichtung (19, 20) aufweist, an welchem ein Bearbeitungswerkzeug (12) und/ oder ein Kühlmittelverteiler (13) lösbar angeordnet sind, und dass die Spanneinrichtung (19, 20) mindestens einen elastisch verformbaren Spannarm (21, 22, 23, 24) aufweist.

7. Schleifmaschine nach Anspruch 6, **dadurch gekennzeichnet, dass** die Spanneinrichtung (19, 20) zwei Spannarme (21, 22, 23, 24) aufweist, welche an ihrem proximalen Ende (26, 27, 35, 36) über ein Verbindungsteil (25, 34) miteinander verbunden sind, und dass das entgegen gesetzte distale Ende (28, 29, 37, 38) der Spannarme (21, 22, 23, 24) frei beweglich und auslenkbar ist.

8. Schleifmaschine nach Anspruch 7, **dadurch gekennzeichnet, dass** die Spannarme (21, 22, 23, 24) an ihrem distalen Ende (28, 29, 37, 38) einen größeren Querschnitt aufweisen als an ihrem proximalen Ende (26, 27, 35, 36).

9. Schleifmaschine nach einem der vorhergehenden Ansprüche, **dadurch gekennzeichnet, dass** ein an einem Werkzeughalter (7) angeordnetes Bearbeitungswerkzeug (12) drehfest an dem Werkzeughalter (7) festgelegt ist.

10. Schleifmaschine nach einem der vorhergehenden Ansprüche, **dadurch gekennzeichnet, dass** ein an einem Werkzeughalter (7) angeordneter Kühlmittelverteiler (13) drehfest an dem Werkzeughalter (7) festgelegt ist.

11. Schleifmaschine nach einem der vorhergehenden Ansprüche, **dadurch gekennzeichnet, dass** die Transfereinrichtung (14) einen Transferarm (15) aufweist, dass der Transferarm (15) an seinem einen Ende mit einem Schlitten (16) ausgestattet ist, der in einer Schlittenführung (17) der Schleifmaschine geführt ist, und dass der Transferarm (15) an seinem anderen Ende mit einer Aufnahmeeinrichtung (18) für mindestens einen Werkzeughalter (7) ausgestattet ist.

12. Schleifmaschine nach einem der vorhergehenden Ansprüche, **dadurch gekennzeichnet, dass** die Schleifspindel (1) eine Indexierung aufweist.

13. Schleifmaschine nach einem der vorhergehenden Ansprüche, **dadurch gekennzeichnet, dass** an dem Werkzeughalter (7) in einer Ausnehmung ein Befestigungsteil (47) beweglich und unverlierbar angeordnet ist, dass das Befestigungsteil an der dem Werkzeugmagazin (6) zugewandten Seite des Werkzeughalters (7) mit einem ersten Abschnitt (48) über den Werkzeughalter (7) übersteht, und dass das Befestigungsteil (47) an der der Transfereinrichtung (14) zugewandten Seite des Werkzeughalters (7) mit einem zweiten Abschnitt über den Werkzeughalter (7) übersteht.

14. Schleifmaschine nach Anspruch 13, **dadurch gekennzeichnet, dass** das Werkzeugmagazin (6) mit Klemmbacken oder Spannarmen ausgestattet ist, welche den ersten Abschnitt (48) des Befestigungsteils (47) aufnehmen, und dass die Transfereinrichtung (14) mit Klemmbacken oder Spannarmen ausgestattet ist, welche den zweiten Abschnitt des Befestigungsteils (47) aufnehmen.

15. Schleifmaschine nach einem der vorhergehenden Ansprüche, **dadurch gekennzeichnet, dass** der Kühlmittelverteiler (13) zwei Kühlmittelverteileinheiten (44, 45) aufweist, die an einer Kühlmittelverteilerbasis (43) lösbar angeordnet sind, und dass die beiden Kühlmittelverteileinheiten im wesentlichen gleich aufgebaut sind und mehrere Rohre (46) oder Schläuche aufweisen.

## Claims

1. Grinding machine for the machining of workpieces
with a grinding spindle (1) having a grinding spindle axis (3),
with a tool mount of the grinding spindle (1), whereby the tool mount accommodates a machining tool (12) in the axial direction,
with a coolant supply (2) of the grinding machine,
with a tool magazine (6) arranged in a movable manner offset relative to the grinding spindle (1), whereby the extension of the grinding spindle axis (3) runs outside the tool magazine (6) and outside the machining tool (12) arranged at the tool magazine (6),
with at least two tool holders (7) to be arranged detachably on the tool magazine (6), whereby at each tool holder (7) are detachably arranged a machining tool (12) which fits into the tool mount of the grinding spindle (1) and a coolant distributor (13) which belongs to the machining tool (12), with a transfer device (14) which accommodates at least one tool holder (7) of the tool magazine (6) configured with a machining tool (12) and a coolant distributor (13), transports the tool holder (7) to the grinding spindle (1) and deposits the machining tool (12) at the grinding spindle (1) and the coolant distributor (13) at the coolant supply (2), whereby the machining tool (12) is connected to the grinding spindle (1) and the coolant distributor (13) is connected to the coolant supply (2), and whereby the machining tool (12) and the coolant distributor (13) are detached from the tool holder (7).

2. Grinding machine according to claim 1, **characterised in that** the transfer device (14) is movable back and forth in a direction perpendicular to the grinding spindle axis (3).

3. Grinding machine according to claim 1 or 2, **characterised in that** the tool magazine (6) is rotatable around a tool magazine axis.

4. Grinding machine according to claim 1 or 2, **characterised in that** the tool magazine has an endless circumferential machine part on which the tool holders are detachably arranged.

5. Grinding machine according to one of the previous claims, **characterised in that** the tool holder (7) has an element with a first section with which the tool holder (7) can be attached to the tool magazine (6) and a second section to which a machining tool (12) and a coolant distributor (13) can be attached.

6. Grinding machine according to one of the previous claims, **characterised in that** the tool holder has at least one clamping device (19, 20) on which a machining tool (12) and/or a coolant distributor (13) are detachably arranged and that the clamping device (19, 20) has at least one elastically deformable clamping arm (21, 22, 23, 24).

7. Grinding machine according to claim 6, **characterised in that** the clamping device (19, 20) has two clamping arms (21, 22, 23, 24) which at their proximal end (26, 27, 35, 36) are connected together by means of a connecting part (25, 34) and that the opposing distal end (28, 29, 37, 38) of the clamping arms (21, 22, 23, 24) is freely movable and deflectable.

8. Grinding machine according to claim 7, **characterised in that** the clamping arms (21, 22, 23, 24) have a greater cross-section at their distal end (28, 29, 37, 38) than at their proximal end (26, 27, 35, 36).

9. Grinding machine according to one of the previous claims, **characterised in that** a machining tool (12) arranged at a tool holder (7) is non-rotatably fixed to the tool holder (7).

10. Grinding machine according to one of the previous claims, **characterised in that** a coolant distributor (13) arranged at a tool holder (7) is non-rotatably fixed to the tool holder (7).

11. Grinding machine according to one of the previous claims, **characterised in that** the transfer device (14) has a transfer arm (15), that the transfer arm (15) is configured at its one end with a carriage (16) that is led in a carriage guide (17) of the grinding machine and that the transfer arm (15) is configured at its other end with a mounting device (18) for at least one tool holder (7).

12. Grinding machine according to one of the previous claims, **characterised in that** the grinding spindle (1) has an indexing mechanism.

13. Grinding machine according to one of the previous claims, **characterised in that** a fixing part (47) is movably and captively arranged in a recess on the tool holder (7), that the fixing part protrudes with a first section (48) beyond the tool holder (7) on that side of the tool holder (7) facing the tool magazine (6) and that the fixing part (47) protrudes with a second section beyond the tool holder (7) on that side of the tool holder (7) facing the transfer device (14).

14. Grinding machine according to claim 13, **characterised in that** the tool magazine (6) is configured with clamping jaws or clamping arms which receive the first section (48) of the fixing part (47) and that the transfer device (14) is configured with clamping jaws or clamping arms which receive the second section of the fixing part (47).

15. Grinding machine according to one of the previous claims, **characterised in that** the coolant distributor (13) has two coolant distribution units (44, 45) that are detachably arranged on a coolant distributor base (43) and that the two coolant distribution units are essentially identically structured and have several pipes (46) or hoses.

## Revendications

1. Machine à meuler destinée à l'usinage par enlèvement de copeaux de pièces à usiner et pourvue
d'une broche porte-meule (1) qui comporte un axe de broche porte-meule (3), d'un raccordement d'outil de la broche porte-meule (1), le raccordement d'outil logeant un outil d'usinage (12) dans le sens axial, d'un dispositif d'alimentation en agent réfrigérant (2) de la machine à meuler,
d'un magasin d'outils (6) disposé de façon mobile et décalé par rapport à la broche porte-meule (1), le prolongement de l'axe de la broche porte-meule (3) étant situé en dehors du magasin d'outils (6) et en dehors des outils d'usinage (12) disposés dans le magasin d'outils (6),
d'au moins deux supports d'outil (7) amovibles disposés dans le magasin d'outils (6), un outil d'usinage (12) qui s'adapte dans le raccordement d'outil de la broche porte-meule (1) et un distributeur d'agent réfrigérant (13) associé à l'outil d'usinage (12) étant disposés de manière amovible sur chaque support d'outil (7),
d'un dispositif de transfert (14) qui prend du magasin d'outils (6) au moins un support d'outil (7) équipé d'un outil d'usinage (12) et d'un distributeur d'agent réfrigérant (13), transporte le support d'outil (7) vers la broche porte-meule (1), et dépose l'outil d'usinage (12) sur la broche porte-meule (1) et le distributeur d'agent réfrigérant (13) sur le dispositif d'alimentation en agent réfrigérant (2), l'outil d'usinage (12) étant alors relié à la broche porte-meule (1) et le distributeur d'agent réfrigérant (13) étant alors relié au dispositif d'alimentation en agent réfrigérant (2), et l'outil d'usinage (12) et le distributeur d'agent réfrigérant (13) étant alors détachés du support d'outil (7).

2. Machine à meuler selon la revendication 1, **caractérisée en ce que** le dispositif de transfert (14) va et vient dans une direction perpendiculaire à l'axe de la broche porte-meule (3).

3. Machine à meuler selon la revendication 1 ou 2, **caractérisée en ce que** le magasin d'outils (6) peut pivoter autour d'un axe du magasin d'outils.

4. Machine à meuler selon la revendication 1 ou 2, **caractérisée en ce que** le magasin d'outils comporte une pièce de machine rotative sans fin sur laquelle sont disposés de manière amovible les supports d'outil.

5. Machine à meuler selon l'une quelconque des revendications précédentes, **caractérisée en ce que** le support d'outil (7) comporte un élément ayant une première partie permettant de fixer le support d'outil (7) sur le magasin d'outils (6) et une deuxième partie sur laquelle peuvent être fixés un outil d'usinage (12) et un distributeur d'agent réfrigérant (13).

6. Machine à meuler selon l'une quelconque des revendications précédentes, **caractérisée en ce que** le support d'outil comporte au moins un dispositif de serrage (19, 20) sur lequel sont disposés de manière amovible un outil d'usinage (12) et/ou un distributeur d'agent réfrigérant (13), et **en ce que** le dispositif de serrage (19, 20) comporte au moins un bras de serrage (21, 22, 23, 24) élastiquement déformable.

7. Machine à meuler selon la revendication 6, **caractérisée en ce que** le dispositif de serrage (19, 20) comporte deux bras de serrage (21, 22, 23, 24) qui sont reliés entre eux à leur extrémité proximale (26, 27, 35, 36) par une pièce de liaison (25, 34) et **en ce que** l'extrémité distale opposée (28, 29, 37, 38) des bras de serrage (21, 22, 23, 24) peut s'écarter et se déplacer librement.

8. Machine à meuler selon la revendication 7, **caractérisée en ce que** les bras de serrage (21, 22, 23, 24) présentent à leur extrémité distale (28, 29, 37, 38) une section transversale supérieure à celle de leur extrémité proximale (26, 27, 35, 36).

9. Machine à meuler selon l'une quelconque des revendications précédentes, **caractérisée en ce qu'**un outil d'usinage (12) disposé sur un support d'outil (7) est fixé sur le support d'outil (7) sans pouvoir pivoter.

10. Machine à meuler selon l'une quelconque des revendications précédentes, **caractérisée en ce qu'**un distributeur d'agent réfrigérant (13) disposé sur un support d'outil (7) est fixé sur le support d'outil (7) sans pouvoir pivoter.

11. Machine à meuler selon l'une quelconque des revendications précédentes, **caractérisée en ce que** le dispositif de transfert (14) comporte un bras de transfert (15), **en ce que** le bras de transfert (15) est équipé à une de ses extrémités d'un chariot (16) qui est guidé dans une glissière de chariot (17) de la machine à meuler, et **en ce que** le bras de transfert (15) est équipé à son autre extrémité d'un dispositif de prise (18) pour au moins un support d'outil (7).

12. Machine à meuler selon l'une quelconque des revendications précédentes, **caractérisée en ce que** la broche porte-meule (1) présente une indexation.

13. Machine à meuler selon l'une quelconque des revendications précédentes, **caractérisée en ce qu'**une pièce de fixation (47) est disposée de façon mobile et imperdable dans un creux sur le support d'outil (7), **en ce qu'**une première partie (48) de la pièce de fixation dépasse du support d'outil (7) sur le côté du support d'outil (7) tourné vers le magasin d'outils (6), et **en ce qu'**une deuxième partie de la pièce de fixation (47) dépasse du support d'outil (7) sur le côté du support d'outil (7) tourné vers le dispositif de transfert (14).

14. Machine à meuler selon la revendication 13, **caractérisée en ce que** le magasin d'outils (6) est équipé de mâchoires de serrage ou de bras de serrage dans lesquels vient se loger la première partie (48) de la pièce de fixation (47), et **en ce que** le dispositif de transfert (14) est équipé de mâchoires de serrage ou de bras de serrage dans lesquels vient se loger la deuxième partie de la pièce de fixation (47).

15. Machine à meuler selon l'une quelconque des revendications précédentes, **caractérisée en ce que** le distributeur d'agent réfrigérant (13) comporte deux unités de distribution d'agent réfrigérant (44, 45) qui sont disposées de manière amovible sur une base de distributeur d'agent réfrigérant (43), et **en ce que** les deux unités de distribution d'agent réfrigérant présentent essentiellement la même structure et comportent plusieurs tubes (46) ou flexibles.
